**Europäisches Patentamt**

**European Patent Office**

**Office européen des brevets**

(11) Publication number: **0 197 692**
**B1**

## (12) EUROPEAN PATENT SPECIFICATION

(45) Date of publication of patent specification: **27.06.90**

(21) Application number: **86302140.8**

(22) Date of filing: **24.03.86**

(51) Int. Cl.⁵: **B 01 D 46/24, F 02 M 35/024**

(54) Air filter.

(30) Priority: **26.03.85 US 716087**
**29.05.85 GB 8513540**
**13.01.86 GB 8600720**

(43) Date of publication of application:
**15.10.86 Bulletin 86/42**

(45) Publication of the grant of the patent:
**27.06.90 Bulletin 90/26**

(84) Designated Contracting States:
**BE DE FR GB IT NL SE**

(56) References cited:
**EP-A-0 100 631**
**DE-A-2 626 008**
**FR-A-1 534 942**
**US-A-2 966 960**
**US-A-3 720 574**

(73) Proprietor: **PIPERCROSS LIMITED**
**Nendex House Ross Road Weedon Road**
**Industrial Estate**
**Northampton NN5 5AX (GB)**

(72) Inventor: **Spicer, Barry Pipercross Ltd.**
**Nendex House Ross Road Weedon Road Ind.**
**Estate**
**Northampton NN5 5AX (GB)**
Inventor: **Wills, Joseph Thomas Pipercross Ltd.**
**Nendex House Ross Road Weedon Road Ind.**
**Estate**
**Northampton NN5 5AX (GB)**

(74) Representative: **Gibson, Stewart Harry et al**
**URQUHART-DYKES & LORD Business**
**Technology Centre Senghennydd Road**
**Cardiff CF2 4AY South Wales (GB)**

Courier Press, Leamington Spa, England.

EP 0 197 692 B1

## Description

This invention relates to an air filter, for example for use in the air-intake line to an internal combustion engine.

It has been common for air filters for automotive vehicles to be made of paper which is pleated to provide a large surface area for trapping dust particles etc., which are carried in the air passing to the internal combustion engine. Recently filters of plastics foam have become available, impregnated with a substance (e.g. an engine oil) which serve to hold the particles which have become trapped by the filter.

US—A—3 720 574 discloses an air filter which may include at least one layer of reticulated foam plastics material and, upstream of that layer (with respect to the flow of air through the filter when in use), a further layer of filter material which comprises a reticulated foam plastics of relatively large pore size as compared with said one layer.

We have devised an improved air filter, which is able to remove dust particles more effectively.

The air filter in accordance with this invention is characterised in that said further layer is a dry impregnant-free layer and the layer or layers downstream of said dry layer are impregnated with a dust-retaining substance which comprises a plasticiser which has been impregnated into said layer or layers at an elevated temperature so as partially to plasticise the foam plastics material of that layer or layers.

Whilst air filters in the past have employed an impregnant of a dust-retaining substance, there has been no use of a plasticiser impregnated into foam plastics filter material at elevated temperature so as partially to plasticise the foam plastics material. With this arrangement not only does the impregnant adhere dust to itself but so also does the partially plasticised surface layers of the cells in the foam plastics material.

The material of the dry, impregnant free layer is preferably rigid or semi-rigid and may comprise a foam plastics (e.g. polyurethane) to which a substance (e.g. pvc) has been applied (e.g. by coating or spraying) to impart to it the required rigidity and without closing any of its pores. The material is preferably very coarse, with a porosity of 8—20 ppi (pore per linear inch) (3.2—7.9 pores per cm). This layer of dry material behaves, at its upstream surface, as a multiplicity of small cyclone separators distributed over that surface, and it is found that significant quantities of particles are thus separated out at the upstream surface of the layer, and fall away without penetrating into the filter materials. This layer thus extends the effective life of the filter.

Preferably there are a plurality of the impregnated layers and preferably they are of progressively smaller pore-size (in the direction of air flow through the filter when in use). A preferred filter includes two such layers of recticulated foam plastics bonded together through openings in an open mesh substrate which is disposed between those layers at that interface. Reticulated foam plastics material is a foam plastics material of which all cells are open.

The filter may comprise, downstream of the impregnated layer or layers (with respect to the flow of air through the filter when in use), a further layer of reticulated foam plastics filter material which has been post-treated with a fire-retardant substance, such that this layer acts both as a filter and a fire break. This filter is effective in its primary function (i.e. filtering) but is also effective in preventing the spread of a fire should for some reason the internal combustion engine blow back or even explode. Such an occurrence is however extremely unlikely to be due to any failure of the embodiments of air filter described in this specification: these particular examples of filters serve very effectively to retain the particles which they trap, with minimal risk that any of these trapped particles will be drawn from the filter (even when aged) and into the engine.

The air filter in accordance with this invention may comprises, downstream of the impregnated layer or layers (with respect to the flow of air through the filter when in use), a further layer of reticulated foam plastics filter material of sufficiently small pore-size so as to clog rapidly in the event of a rupture in or breakdown of the upstream layers. This further layer provides a safety feature for the engine and may comprise foam plastics material which has been permanently compressed in thickness.

Embodiments of this invention will now be described, by way of examples only, with reference to the accompanying drawings, in which:

Figure 1 is a partial plan view of a first embodiment of air filter, with a portion broken away to show details;

Figure 2 is a combined side elevation and cross-sectional view of the filter of Figure 1;

Figures 3 and 4 are similar views of a second embodiment of air filter;

Figures 5a and 5b are cross-sections, mutually at right angles to each other, through a layer of filter material intended to be used in the air filter of Figure 1, 2 or 3, 4;

Figures 6a and 6b are a cross-section and a longitudinal section through an apparatus for forming layers of material as shown in Figures 5a, 5b;

Figure 7 is a diagram of an apparatus for forming a composite filter material used in the filters of Figures 1—4; and

Figure 8 is a diagram of an apparatus for impregnating the composite.

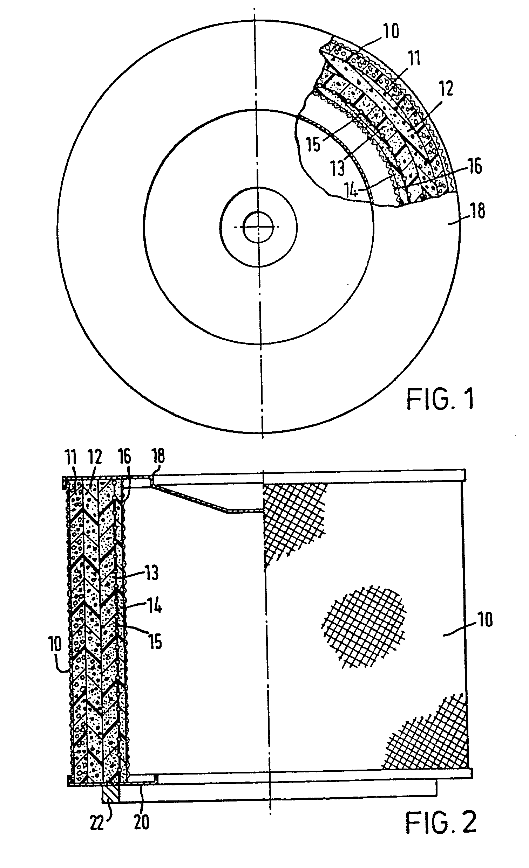

Referring to Figure 1 and 2, there is shown an air filter in cylindrical form for fitting into a cylindrical air filter casing mounted on the vehicle. Air is usually drawn tangentially into the casing, then through the wall of the filter and finally through the bottom of the filter and the bottom of the casing, along the axis of the filter and its casing.

The filter shown comprises an outer cylindrical cage 10 formed of perforated sheet metal or of expanded metal, and a similar inner cage 16.

Sandwiched between these two concentric cages are a plurality of layers of filter material, which will be described in detail below. The filter is completed by top and bottom metal caps 18, 20 which are bonded to the cages 10 and 16 to form a rigid, integral structure. An annular gasket 22 is bonded to the bottom of the cap 20, to seal against the inside of the filter casing around the air outlet.

The layers of filter material, in the air filter of Figures 1 and 2, are as follows. Adjacent the outer cage 10 there is a layer 11 of dry, reticulatd foam plastics material, 5—20 mm thick and with a porosity of 3.2—7.9 pores per cm (8—20 ppi, pores per linear inch). This layer may comprises polyurethane and is preferably rigid or semi-rigid, having had a substance (e.g. pvc) applied to it (e.g. by coating or spraying) to impart to it the required rigidity and without closing any of its pores. Next there is a layer 12 of reticulated foam plastics, 5—20 mm thick and with a porosity of 7.9—13.8 pores per cm (20—35 ppi). Finally there is a composite formed of two layers 13, 14 of reticulated foam plastics bonded together at their interface with the interposition of an open-mesh substrate 15. The outer of these two layers (13) has a thickness of 10—20 mm and a porosity of 5—60 ppi (preferably 45±4 ppi), and the inner layer (14) has a thickness of 6—10 mm and a porosity of 23.6—39.4 pores per cm preferably 25.6±2.4 (60—100 ppi preferably 65±6 ppi). The open mesh substrate is approximately one millimetre in thickness.

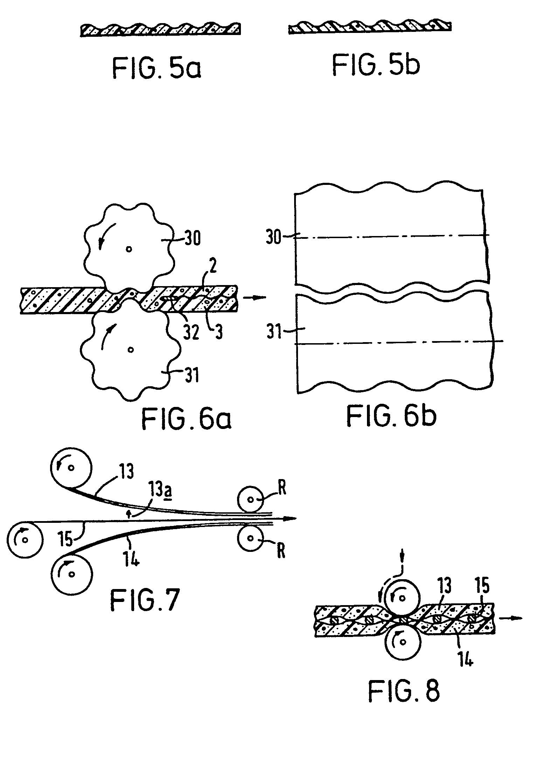

The composite 13, 14 may be formed as shown in Figure 7. Layers 13, 15 and 14 pass from respective rolls of the materials into superimposed engagement. Just prior to the layers coming together, flames 13A are positioned to play onto the surface of the layer 13. Immediately downstream of this, the layers come together and are pressed together between rolls R, R. The flames soften the surface of the layer 13, such that when the layers are pressed together, the two layers 13, 14 bond together (i.e. are flamebonded) in the openings through the mesh substrate 15. The mesh substrate 15 imparts a degree of mechanical stability to the composite, to prevent the composite distorting when it is being cut to shape and when it is being impregnated (see below) Its main function is however to co-operate wpzh the layers 13, 14 at the interface to provide a reservoir for the impregnating substance, as also described below.

The layers 12, 13, 14 of foam plastics are all impregnated with a plasticiser which serves to hold the particles which are trapped in the filter element: the layer 11 is however dry. The plasticiser may comprise for example a chlorine modified (or chlorinated) long chain paraffin hydrocarbon which is stabilised for elevated temperature applications by the addition of a soya bean oil extract. The material of the layers 12, 13, 14 may be polyurethane and the open mesh substrate 15 may comprise a grid or net of flexible polypropylene; the substrate 15 preferably presents a surface area which is not more than 10% of the surface area of layers 13 or 14, so as not to restrict the flow of air through the filter unduly. The substrate 15 acts to hold the impregnant within the composite 13, 14, serving as a reservoir for this impregnant at the interface of the two layers 13, 14 and in particular in the corners of the openings through the substrate 15, at which corners the layers 13, 14 fail to bond together.

The composite 13, 14 is impregnated as shown in Figure 8. The composite 13, 14 is passed between two compression rolls R1, R1. The pregnating plasticiser flows onto the top of the upper roll and around its upstream surface, to flow onto the composite just where it is being compressed to substantially the thickness of the substrate 15. The plasticiser thus finds its way to the interface between layers 13, 14. The composite returns to its original thickness downstream of the rolls and takes in the plasticiser by suction. Nevertheless the interface region retains a maximum density of the substance. The impregnating process takes place at an elevated temperature (e.g. about 70°C) so that the plasticiser partially plasticises the foam plastics material of the layers 13, 14. The soya beam oil extract in the plasticiser prevents the latter from oxidising at the impregnating temperature and further, as the temperature falls thereafter, stops the plasticiser from acting further on the foam plastics material. The layer 12 may be impregnated in similar manner.

In use of the filter shown in Figure 1 and 2, the air flows generally radially inwards and thus the dry layer 11 is the first layer which it meets. The layer sets up a cyclonic effect on the incoming air to cause particles (at least heavier particles) in the air to drop off outside the filter. Indeed, the material of layer 11 has sufficiently large pores (i.e. sufficiently coarse) that its outer surface is found to behave as a multiplicity of small cyclone separators distributed over that surface, the dray layer presenting a multiplicity of coarse, rigid, open pores to the incoming air. Significant quantities of particles are thus found to separate out at the outer surface of layer 11 and fall to the bottom of the filter casing without penetrating into the filter layers. The successive layers 12, 13, 14 serve to retain the particles which do penetrate, the pores of these layers being progessively smaller and, in general, trapping the successively smaller particles.

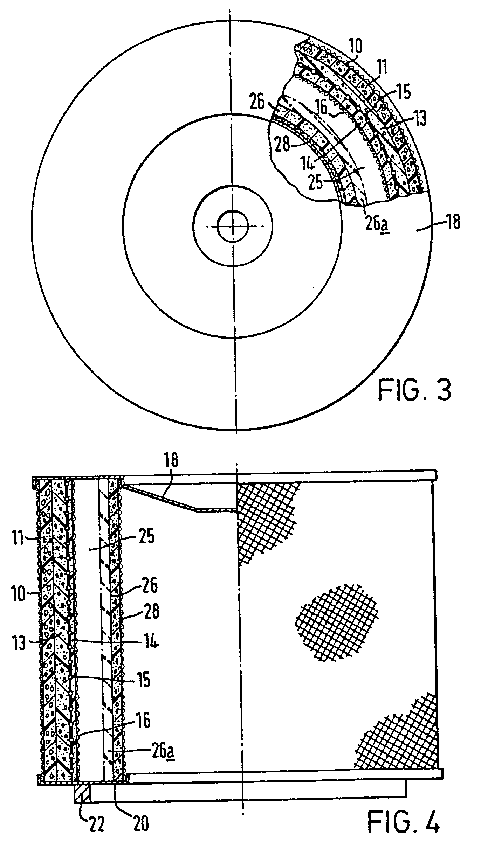

The embodiment of air filter element shown in Figures 3 and 4 is similar to that shown in Figures 1 and 2 (although the layer 12 is absent) and likeparts are indicated by like-reference numerals. However, a further filter layer 26 is disposed on the inner or downstream side of the filter element, together with a further cage 28 (similar to cages 10 and 16) against which the layer 26 is positioned for support. An air gap 25 of 5—20 mm thickness is provided between the cage 16 and the layer 26.

The additional filter layer 26 not only serves a filtering function, but also acts as a fire-break. The layer 26 comprises a reticulated foam plastics (e.g. polyurethane) with a porosity of 25.6—39.4 pores per cm (65—100 ppi), and the material has been post-treated with an appropriate fire retardant substance, being impregnated with a substance including fire retardant additives which serve to actively extinguish flames, but without closing any of the pores. The layer 26 may comprise a material available on the market under a trade name "Firend" and conforms to British Standard BS 476 PT 7 Class 1. This material is dry initially but is then impregnated with a plasticiser such as previously specified.

The filter of Figure 3 and 4 is thus particularly effective not only for filtering but also for preventing the spread of fire should for some reason the internal combustion engine blow back or even explode (which are previously noted would be unlikely to occur through any failure of the filters described in this specification).

In a modification of the air filter of Figures 3 and 4, the fire-break filter layer 26 is replaced by a layer of very fine-pore material, such that in the event of any possible rupturing or breakdown of the outer layers, the pores of this layer will become clogged with dust very quickly and thus prevent any further air and dust passing to the engine. This layer preferably comprises a reticulated foam plastics material which has been permanently compressed in thickness by a predetermined factor to render it effective in filtering substantially smaller particles than the base, uncompressed material. Such permanent compression is achieved by compressing the base material at elevated temperature, such that when the compressing force is removed, the material remains compressed in thickness. By compression factor is meant the ratio of the initial thickness to the thickness after the permanent compression: for the air filter shown, a base material of porosity 25.6—33.5 pores per cm (65—85 ppi), compressed by a factor of 2—6 may be used; the final thickness being 1—2 mm. The layer may be provided together with the fire-break layer, the latter being moved to 26a and the permanently compressed layer positioned at 26 as shown in Figures 3 and 4.

In a modification applicable to either of the embodiments shown in Figures 1—4, the outer surface of the outer layer 13 of the composite 13, 14 (or instead the outer surface of the layer 12 in Figures 1 and 2), may be profiled so as to increase its surface area, and thus enhance its dust-holding capacity. One example of an appropriate profiling is shown in Figures 5a, 5b; the cross-section undulates in both of two perpendicular directions and in essence the surface exhibits a plurality of distributed pyramids. Such profiling may be achieved by passing a sheet 1 of foam plastics material between a pair of rollers 30, 31 as shown in Figures 6, 6a and into a cutting edge 32 which divides the sheet 1 into two layers 2, 3. The two rollers are provided with teeth around their circumference: the teeth on each roller undulate along their length as shown, but the teeth of one roller mesh with the teeth of the other roller. Accordingly, the sheet 1 is differently compressed such that when divided by the cutting edge 32, the two layers 2, 3 (when relieved of the compressing force) exhibit profiled surfaces facing each other and complementarily fitting together: when then lifted apart, two profiled layers are provided for use in air filters.

Various other modifications may be made to the filters which have been described with reference to Figures 2—4 of the drawings. Firstly, an air gap of 5—20 mm may be provided between the outer metal cage 10 and the dry layer 11. Secondly, in Figure 1 and 2 the layer 12 may be dispensed with and the dry layer 11 placed in contact with the composite 13, 14: conversely the layer 12 may be provided in Figures 3 and 4. If the flow of air is to be radially outwards instead of radially inwards, then the order of the various component layers would be reversed. Instead of a cylindrical configuration for the air filter element, other configurations may be employed: for example the element may be in the form of a panel, with all the layers laid flat and held within the peripheral frame (e.g. of rectangular shape).

The end caps, instead of being of metal and bonded on, may be of plastics, either moulded separately and on or moulded *in situ*.

The air filter elements which have been described provide a particularly effective filtering function and the life-time of the elements is substantially extended relative to filters which have hitherto been available for the corresponding applications.

The composite 13, 14 imparts a fail-safe section to the filters which have been described. At the interface between the two layers 13 and 14, the pore size is smaller than elsewhere within the composite, and a higher density of the impregnant is retained. The dust therefore collects mostly at this interface, thus constricting the pores even further. Gradually, a pressure drop builds up across the filter layers, causing the inner or downstream layer 14 (see Figures 1, 2 and 3, 4) to be compressed against the metal cage 16. Eventually, this compression is sufficient to shut off the inner layer 14 completely, straving the engine of air and causing it to stop. The dust which has been retained within the filter composite however remains in position and is not sucked through the filter towards the engine. The permanently compressed layer, when provided as layer 26 in Figures 3, 4 acts as an additional fail-safe feature as described above.

In the composite 13, 14, the two layers may be bonded together using adhesive and still achieve the preferred feature that the pore-size adjacent the interface is smaller than elsewhere within the two layers.

It will also be appreciated that, with the particular example of impregnant given, this has flame-retarding properties owing to the chlorine given off on combustion.

**Claims**

1. An air filter which includes at least one layer of reticulated foam plastics filter material (e.g. 13) and, upstream of that layer of those layers (with respect to the flow of air through the filter when in use), a further layer (11) of filter material which comprises a reticulated foam plastics of relatively large pore-size; as compared with said one layer, characterised in that said further layer is a dry plasticiser-free layer and said layer or layers (e.g. 13) downstream of said dry layer are impregnated with a dust-retaining substance which comprises a plasticiser which has been impregnated into said layer or layers at an elevated temperature so as partially to plasticise the foam plastics material of that layer or layers.

2. An air filter as claimed in claim 1, characterised in that the dry foam plastics material of said further layer (11) is rigid or semi-rigid.

3. An air filter as claimed in claim 2, characterised in that the dry foam plastics material of said further layer (11) has had a substance applied to impart its rigidity to it.

4. An air filter as claimed in any preceding claim, characterised in that two said layers (13, 14) of impregnated foam plastics are bonded together face-to-face through openings in an open mesh substrate (15) which is disposed between those layers at their interface.

5. An air filter as claimed in any preceding claim, characterised in that downstream of the impregnated layer or layers, there is a further layer of filter material (26a) which comprises a recticulated foam plastics filter material which has been post-treated with a fire-retardant substance, such that this layer (26a) acts both as a filter and fire-break.

6. An air filter as claimed in claim 5, characterised in that an air gap (25) is provided between said impregnated layer or layers and said further layer (26a) of filter material.

7. An air filter as claimed in any preceding claim, characterised in that downstream of said impregnated layer or layers, there is a further layer of filter material (26) which comprises a reticulated foam plastics filter material of sufficiently small pore-size as to clog rapidly in the event of a rupture in or breakdown of the layers upstream thereof.

8. An air filter as claimed in claim 7, characterised in that said further filter layer (26) of small pore size comprises a foam plastics material which has been permanently compressed in thickness.

9. An air filter as claimed in any preceding claim, characterised in that the porosity of said dry foam plastics material is 8—20 pp (3.2—7.9 pores per cm).

10. An air filter as claimed in any preceding claim, characterised in that a said impregnated layer of foam plastics material adjacent said dry layer has a porosity of 60—100 ppi (23.6—39.4 pores per cm).

**Patentansprüche**

1. Luftfilter, der wenigstens eine Schicht von netzförmigem Schaumkunststoffiltermaterial (z.B. 13) und stromauf von dieser Schicht oder diesen Schichten (in bezug auf die Luftströmung durch den Filter bei dessen Benutzung) eine weitere Schicht (11) aus Filtermaterial aufweist, das ein netzförmiges Schaumkunststoffmaterial mit im Vergleich mit der einen Schicht verhältnismäßig großer Porengröße enthält, dadurch gekennzeichnet, daß die weitere Schicht eine trockene, weichmacherfreie Schicht ist und die Schicht oder Schichten (z.B. 13) stromab von dieser trockenen Schicht mit einer staubbindenden Substanz getränkt sind, die einen Weichmacher aufweist, mit dem die Schicht oder Schichten bei einer erhöhten Temperatur getränkt sind, um so das Schaumkunststoffmaterial der Schicht oder Schichten teilweise zu erweichen.

2. Luftfilter nach Anspruch 1, dadurch gekennzeichnet, daß das trockene Schaumkunststoffmaterial der weiteren Schicht (11) steif oder halbsteif ist.

3. Luftfilter nach Anspruch 2, dadurch gekennzeichnet, daß am trockenen Schaumkunststoffmaterial der weiteren Schicht (11) eine Substanz angebracht ist, um ihr die Steifigkeit zu geben.

4. Luftfilter nach einem vorangehenden Anspruch, dadurch gekennzeichnet, daß zwei Schichten (13, 14) von getränktem Schaumstoffmaterial Fläche an Fläche durch Öffnungen in einem offenen Gitterträgermaterial (15) miteinander verbunden sind, das zwischen diesen Schichten an der Berührungsfläche angeordnet ist.

5. Luftfilter nach einem vorangehenden Anspruch, dadurch gekennzeichnet, daß stromab de getränkten Schicht oder Schichten eine weitere Schicht aus Filtermaterial (26a) angeordnet ist, die ein netzförmiges Schaumkunststoffiltermaterial aufweist, das mit einer feuerhemmenden Substanz nachbehandelt ist, so daß diese Schicht (26a) sowohl als Filter als nach feuerunterbrechend wirkt.

6. Filter nach Anspruch 5, dadurch gekennzeichnet, daß eine Luftzwischenraum (25) zwischen der getränkten Schicht oder den getränkten Schichten und der weiteren Schicht (26a) von Filtermaterial vorgesehen ist.

7. Luftfilter nach einem vorangehenden Anspruch, dadurch gekennzeichnet, daß stromab der imprägnierten Schicht oder Schichten eine weitere Schicht aus Filtermaterial (26) vorgesehen ist, die ein netzförmiges Schaumkunststoffiltermaterial mit ausreichend kleiner Porengröße aufweist, so daß es im Falle eines Reißens oder eines Zusammenbrechens der stromauf davon angeordneten Schichten schnell verstopft.

8. Luftfilter nach Anspruch 7, dadurch gekennzeichnet, daß die weitere Filterschicht (26) mit kleiner Porengröße ein Schaumkunststoffmaterial aufweist, das dauernd in seiner Dicke zusammengedrückt ist.

9. Luftfilter nach einem vorangehenden Anspruch, dadurch gekennzeichnet, daß die Porosität des trockenen Schaumkunststoffmaterials 8—20 Poren pro Zoll (3,2 bis 7,9 Poren pro cm) beträgt.

10. Luftfilter nach einem vorangehenden Anspruch, dadurch gekennzeichnet, daß die getränkte Schicht aus Schaumkunststoffmaterial, die der trockenen Schicht benachbart ist, eine Porosität von 60—100 Poren pro Zoll (23, 6 bis 39,4 Pore pro cm) aufweist.

**Revendications**

1. Filtre à air du type comprenant au moins une couche de matériau filtrant en mousse plastique (réticulée (e.g. 13) et, en amont de cette ou de ces couches (par rapport au flux d'air s'écoulant à travers le filtre lorsque celui-ci fonctionne), une couche supplémentaire (11) de matériau filtrant qui comprend une mousse plastique réticulée dont la taille des pores est relativement importante en comparaison avec la première couche, caractérisé en ce que ladite couche supplémentaire est une couche libre et sèche et la ou les premières couches (e.g. 13) en aval de la couche sèche sont imprégnées avec une substance de rétention de la poussière qui comprend un plastifiant qui a été imprégné sur ladite ou lesdites couches à température élevée, de façon à plastifier partiellement la mousse en matériau plastique de cette ou de ces couches.

2. Filtre à air selon la revendication 1, caractérisé en ce que la mousse sèche en matériau plastique de ladite couche supplémentaire (11) est rigide ou semi-rigide.

3. Filtre à air selon la revendication 2, caractérisé en ce que la mousse sèche en matériau plastique de ladite couche supplémentaire (11) comporte une substance appliquée dans le but de transmettre sa rigidité à la couche.

4. Filtre à air selon l'une des revendications précédentes, caractérisé en ce que deux des premières couches (13, 14) de mousse en plastique imprégnée sont liées l'une à l'autre face à face par l'intermédiaire d'ouvertures formées dans un substrat à maille ouverte (15) qui est disposé entre ces deux couches au niveau de leur interface.

5. Filtre à air selon l'une des revendications précédentes, caractérisé en ce qu'en aval de la ou des couches imprégnées, se trouve une couche supplémentaire de matériau filtrant (26a) qui comprend un matériau filtrant en mousse plastique réticulée qui a été traité ultérieurement avec une substance ignifuge retardant le feu de telle manière que cette couche (26a) agit à la fois comme un filtre et comme un coupe-feu.

6. Filtre à air selon la revendication 5, caractérisé en ce qu'un évidement d'air (25) est disposé entre ladite ou lesdites couches impégnées et ladite couche supplémentaire (26) du matériau filtrant.

7. Filtre à air selon l'une quelconque des revendications précédentes, caractérisé en ce qu'en aval de ladite ou lesdites couches imprégnées se trouve une couche supplémentaire de matériau filtrant (26) qui comprend un matériau filtrant à base de mousse en plastique réticulée dont les pores ont une taille suffisamment petite pour obstruer rapidement ceux-ci dans le cas où surviendrait une rupture ou une cassure dans les couches situées en amont de cette couche supplémentaire (26).

8. Filtre à air selon la revendication 7, caractérisé en ce que ladite couche de filtre supplémentaire (26) ayant des pores de petite taille comprend une mousse en matériau plastique qui a été compressée de façon permanente dans son épaisseur.

9. Filtre à air selon l'une des revendications précédentes, caractérisé en ce que la porosité de ladite mousse sèche de matériau plastique est de l'ordre de 8—20 ppi (3,2—7,9 pores par cm).

10. Filtre à air selon l'une des revendications précédentes, caractérisé en ce que la couche imprégnée de mousse en matériau plastique adjacente à ladite couche sèche possède une porosité de l'ordre de 60—100 ppi (23,6—39,4 pores par cm).

EP 0 197 692 B1

FIG. 1

FIG. 2

FIG. 3

FIG. 4

FIG. 5a

FIG. 5b

FIG. 6a

FIG. 6b

FIG. 7

FIG. 8